# EUROPEAN PATENT SPECIFICATION

(11) **EP 0 576 626 B1**
(45) Date of publication and mention of the grant of the patent: **02.08.1995**
(21) Application number: 92915181.9
(22) Date of filing: 23.03.1992
(51) Int. Cl.: C04B 41/89

(54) **COATINGS FOR COMPOSITE ARTICLES**
BESCHICHTUNGEN FÜR VERBUNDKÖRPER
REVETEMENTS POUR ARTICLES COMPOSITES

(30) Priority: 22.03.1991 US 673351
(43) Date of publication of application: 05.01.1994
(73) Proprietor: E.I. DU PONT DE NEMOURS AND COMPANY, Wilmington Delaware 19898 (US)
(72) Inventor: GRAY, Paul, Edward, Northeast, MD 21901 (US); HEADINGER, Mark, Henry, Hockessin, DE 19707 (US)
(74) Representative: Abitz, Walter, Dr.-Ing.
(86) International application number: US9202129
(87) International publication number: WO9219567

(56) References cited:
- EP-A- 0 382 476
- EP-A- 0 392 822
- FR-A- 2 589 855
- US-A- 4 735 850
- Chemical Abstracts, vol. 112, no. 6, 5 February 1990, (Columbus, Ohio, US), see page 357, abstract no. 41424r, & JP-A-01167290 (KAWASAKI STEEL CORP.) 30 June 1989, see abstract

## Description

### BACKGROUND OF THE INVENTION

This invention relates to improved coatings for composite articles for use in high temperature applications.

Composite articles capable of withstanding exposure to high temperatures have been developed, but there continues to be a need for articles capable of surviving repeated cycles of high temperature and high humidity. It has long been recognized that a major cause of failure of composite articles in high temperature environments is the diffusion of oxygen into the article and the oxidation of the composite matrix, the reinforcing fibers or other elements of the article which are subject to oxidation at high temperatures. There have been many developments aimed at scavenging any oxygen which does penetrate by preferentially oxidizing compounds which form glasses to fill oxygen pathways and prevent further oxygen penetration. Concurrently, composite articles have been coated with inert and impervious layers to prevent the diffusion of oxygen into the composite article.

There remains a need for a means of protecting composite materials which are to be subjected to repeated exposure both high temperatures and high humidities. Articles which can withstand such conditions are useful in many applications, one example being in high-performance jet engines. The process of this application provides the required protection for composite articles, and has the advantage of relative processing ease, and excellent dimensional control.

### SUMMARY OF THE INVENTION

The process of this invention is well suited to form protective layers on composite materials which have a matrix of either carbon or ceramic material. In the first step the composite article is coated with a mixture of solid particles suspended in a liquid binder. The particles have diameters of from 0.05 to 50 micrometers, and the binder is present in an amount of from about 1 to about 25% by weight of the particles. This coating is referred to herein as the green coating.

The binder must be curable; that is it must be convertible to either carbon char or to a ceramic material such as silicon carbide on heating. Prior to the final conversion to char or ceramic material the binder must be crosslinked or thermoset to render it dimensionally stable during subsequent heating for the final conversion. The initial crosslinking or thermosetting is generally accomplished by heating to a moderate temperature, but some polymers crosslink on exposure to ultraviolet light. The term "curing" as used in this application refers to both the initial crosslinking or thermosetting of the binder as well as the subsequent more severe heating to complete the conversion of the binder to char or ceramic. The second step of the process is to cure the green coating by heating to convert the binder to char or ceramic material.

The cured coating is then infiltrated and covered by a ceramic layer deposited by chemical vapor infiltration (CVI). In a preferred process, this CVI layer is itself subsequently coated with a solution of a curable preceramic polymer such as a polycarbosilane or polycarbosilazane. This solution will wet and fill any microcracks or pores remaining after the CVI process. The preceramic polymer is then cured to form a ceramic material such as silicon carbide or silicon nitride which improves resistance to infiltration by oxygen. However, this preferred final step is not essential to obtaining a serviceable coating.

Also included within the scope of this invention are composite articles protected by the process of this invention.

### DESCRIPTION OF THE PREFERRED EMBODIMENTS

Composite materials suitable as substrates for the process of this invention are carbon-carbon composites, ceramic matrix composites which are reinforced by carbon fibers, or ceramic matrix composites reinforced with ceramic fibers which are protected by a debonding layer which is subject to oxidation. The construction of these composite materials is well known in the art. Such materials frequently have residual porosity which act as paths for entry of oxygen which attacks the reactive elements of the composite at high temperatures. Even composites which have internal oxygen-scavenging components can benefit from a coating which prevents or substantially retards the entry of oxygen. The process of this invention is particularly suited to composites having a matrix of silicon carbide or silicon nitride which are intended for high temperature applications.

The particles useful in this invention may be selected to be compatible with the CVI process and the environment in which the coated composite article will be placed. If the article will not be exposed to very high temperatures, metal particles may be used provided the metal melting point is greater than the anticipated service temperature. For higher temperatures, ceramic materials may be employed. Particles which will form a glass in the presence of oxygen may be used, and the particles selected to form a glass most suited to the conditions of use of the coated composite article. For example, a mixture of calcium boride particles and silicon carbide from the CVI process would yield a glass of low volatility at very high temperatures. Complex multilayer coatings can be built up by applying successive layers of a slurry of different particles. Glass-forming particles would provide an oxygen-scavenging crack-healing under layer with an outer layer of silicon carbide to provide maximum resistance to the invasion of oxygen.

Preferred particles for use in this invention consist of intermetallic alloys containing predominantly boron and silicon with other elemental additions which provide processing ease/stability and may modify the resultant sealant glass composition formed by these particles in an oxidizing environment. Examples of these alloys or compounds include boron carbide, silicon carbide, silicon boride, calcium boride, tantalum boride, niobium boride, hafnium boride, aluminum boride, zirconium boride, rare-earth borides, yttrium boride, germanium boride, germanium silicide, titanium silicide and titanium boride. Metallic silicides and mixed phase boride/silicide combinations are also useful. For certain applications limited to lower use temperatures, elemental boron and silicon may be employed with success.

Selection of the proper particle size is important to the formation of impervious coatings by this process. The particle size must be such that the particle-binder cured coating can be infiltrated when exposed to CVI. If the particles are excessively fine, the particle coating will not be readily infiltrated. If the particles are too coarse, the finished layer can contain too much residual porosity. Thus, particles in the range of 0.05 to 50 micrometers in diameter are useful in this invention, with particles having diameters in the range of 0.1 to 30 micrometers being preferred.

The binder selected must be curable. That is, it must yield either carbon char or a ceramic material on heating. Examples of char-producing binders are phenolic, epoxy, furan and polyimide resins, pitches, pitch derivatives and individual pitch constituents. Binders which produce ceramics are, for example, polymers which contain silicon such as polycarbosilane which decomposes to silicon carbide on heating and polycarbosilazane which decomposes to silicon nitride on heating. Other silicon-containing polymers useful as binders include polysilanes, organosilsesquioxane-containing sol-gels, and polyorganosiloxanes.

Some polycarbosilanes are commercially available. An example is "Nicalon" polycarbosilane X9-6348. It is derived by the action of sodium on dichloromethylsilane and is produced by Nippon Carbon and distributed by Dow Corning.

Preferred binders are those that produce ceramics on heating. Silicon containing polymers are more preferred and particularly preferred are polycarbosilanes and polycarbosilazanes.

The ratio of binder to particles is critical. If the percentage of binder is too low, the resultant green coating is too fragile and the particles may fall from the article during subsequent processing. If the amount of binder is too high, the resultant green coating is not easily permeated in the CVI operation. This will result in poor adhesion of the coating to the substrate and the possible formation of shrinkage cracks at high temperatures or instability at high temperatures. Accordingly, the amount of binder should be selected so that the amount of residue, either char or ceramic material, remaining after curing is from 1 to 25% by weight of the particles used. Preferably, the amount of binder should be selected so the residue remaining from the binder after curing is from 5 to 15% by weight of the particles.

The binders can be mixed with the solid particles without dilution if their melting points and viscosities are suitable, or the binders can be dissolved in an appropriate solvent. The binder-particle mixture can be applied to the composite article by conventional techniques such as spraying, dipping or brushing. The resulting coating can be easily inspected to assure uniformity and integrity of the binder-particle coating. The green coating is generally applied so that the particle layer has a depth of 0.5 to 25 mils (about 12 to about 625 micrometers).

The green coating is cured by heating. Typically, the resin in the green coating is initially crosslinked by heating in air to a moderate temperature, for example, from 210 - 230°C for 30 minutes. The temperature used for the final part of the curing process should be sufficient to convert the binder to char or to ceramic, and will depend on the choice of binder. For a polycarbosilane binder, heating to a temperature of from 800 - 1200°C is sufficient to convert the polymer to silicon carbide.

The cured layer is then infiltrated with ceramic material by CVI. The fact that the particles present a porous surface and the binder does not completely coat the underlying ceramic matrix permits the infiltration of ceramic material into any residual porosity of the underlying ceramic. The ceramic material also fills in void spaces between particles on the surface of the article. Finally, as the porous layer becomes fully infiltrated, the CVI process overcoats the entire particle layer. In this way, a ceramic layer is built up which is intimately and firmly bonded to the underlying ceramic matrix in a way that could not be achieved by the more rapid process of chemical vapor deposition. Because the ceramic coating extends from the outer surface into the porosity of the underlying matrix, there is less chance that the coating will be cracked due to differences in the coefficients of thermal expansion of the matrix and the outer coating. Further, since the final thickness of the layer is largely determined by the thickness of the particle layer, this CVI process provides much greater dimensional control than is possible in a CVD process. This means that production of parts to tight dimensional tolerances is possible which reduces the need for subsequent machining. Finally, the CVI process produces a smooth and uniform surface, the coated article having nearly the same final dimensions as the article having only the green coating. This CVI process does not require the complex gas distribution systems in the CVI reactor which would be the case in a CVD process.

These advantages are obtained because the rate of deposition of ceramic material is substantially less in a CVI process than in a CVD process. However, because much of the bulk of the coating layer is applied in the form of a slurry of solid particles, only a small amount of material need be applied through the CVI process to intimately bond these particles to themselves and to the underlying substrate. The ceramic applied by CVI exhibits higher strength and dimensional stability than coatings applied by CVD. Thus the performance of the coatings applied by the process of this invention perform better than coatings applied by conventional methods.

The CVI ceramic coat is applied so that the particle layer is covered generally to a depth of 0.1 to 25 mils (about 2.5 to about 625 micrometers). The CVI process can deposit a number of different ceramic compositions. It is preferred to employ silicon carbide or silicon nitride as the material laid down by the CVI process. The operation of the CVI process and the choice of gasses to be used in the process are well known to those skilled in the art. It is preferred to shield the articles from direct impingement of the gasses in the CVI reactor.

### EXAMPLES

### EXAMPLE 1

A slurry of 10.0 parts by weight "Nicalon" polycarbosilane (PCS) from Nippon Carbon and 100 parts Starck grade HP boron carbide were dispersed in 300 grams of toluene. The slurry was prepared by first dissolving the PCS in the toluene and then adding the boron carbide powder. The slurry was then brushed onto the surface of some 1" x 2" (2.5 cm x 5 cm) C/SiC composites containing an antioxidant additive to a depth of 5-8 mils (125-200 micrometers). Care was taken to ensure the coating was continuous and free from any pinholes or other obvious defects. After the painting of the coupon with the slurry, the PCS in the "green"coating was crosslinked in air to render it stable at the infiltration temperature by heating it to 200-230°C for 30 minutes. The coupon was cooled and loaded into the CVI reactor. The stabilized PCS binder is pyrolyzed as the reactor is heated to the temperature at which the CVI process is conducted. The coupon was then infiltrated with SiC in the reactor using methyl trichlorosilane and hydrogen at standard deposition conditions. After infiltration, the coupon was coated with a 25% solution of the PCS in toluene until the surface was observed to be smooth and free from pits. The sample was allowed to dry at 25-40°C for 4 hours to completely remove the solvent. The PCS coated coupon was slowly heated to 210-225°C over a period of 2 hours and allowed to remain at that temperature for an an additional 30 minutes to cross-link the polymer and then placed in a nitrogen purged furnace and heated to 1400°C over a 2 hour period, and held at that temperature for an additional 15 minutes to assure complete pyrolysis of the polymer. The coupon was lightly brushed to remove excess ceramic remaining on the surface. The coupon was exposed to an oxidation test cycle in which the coupon was placed in an oven at 1400°C for 5 minutes, moved to an oven at 650°C for 30 minutes, returned to the 1400°C oven for an additional 5 minutes and then cooled to room temperature. The weight change of the coupon as a percentage of the total weight after 60, 120, 180 and 250 thermal cycles is shown in the Table below in the column identified as B4C. Another test was performed to assess the effect of humidity and thermal cycling on the coupon coated by this technique. The coupon was subjected to a combination of 6 thermal cycles described above followed by 20 hours of 100% humidity at 90-100°F (32-38°C). The weight change as a percentage of the total weight was noted after 36 thermal cycles were completed and after 120 hours exposure to the humidity, and then noted again after 72 thermal cycles and after a total of 240 hours humidity exposure. The data are shown in the Table in the column identified as B₄C.

### EXAMPLE 2

A sample of C/SiC containing an oxidation-resistant additive was coated in a manner similar to that of Example 1 except that an additional layer of 4-6 mils (100 - 150 micrometers) of particulate SiC with 10% PCS binder was applied over the B₄C layer. This 2-layer coating was then infiltrated with SiC by CVI as described in Example 1. Afterwards, the coupon was coated with an additional layer of the neat polycarbosilane resin, and cured as described in Example 1. The coated coupon was exposed to the same thermal and thermal-humidity cycles described in Example 1. The oxidation performance of this coating on the C/SiC substrate is shown in the Table in the column identified as B₄C + SiC.

### EXAMPLE 3

In this example, a 2-layer coating as outlined in Example 2 was made substituting calcium boride powder for the boron carbide powder. The same tests outlined above were conducted. The weight change of the sample is shown in the Table in the column identified as CaB₆ + SiC.

**TABLE**

| percent weight change | | | |
|---|---|---|---|
| Thermal Cycles | B₄C | B₄C+ SiC | CaB₆+ SiC |
| 60 | 0.096 | 0.152 | 0.567 |
| 120 | 0.125 | 0.276 | 0.523 |
| 180 | 0.155 | 0.371 | 0.141 |
| 250 | 0.251 | 0.422 | 0.104 |

| Thermal/Humidity Cycles | | | |
|---|---|---|---|
| 36 Thermal Cycles | -0.03 | -0.03 | 0.128 |
| 120 Hr. Humidity | 1.7 | 2.12 | 1.54 |
| 72 Thermal Cycles | -0.46 | -0.42 | -0.04 |
| 240 Hr. Humidity | 2.19 | 2.5 | 2.2 |

## Claims

1. A process for applying a coating to a composite article having a matrix selected from carbon or ceramic material, said matrix having surface porosity, the process comprising
a. forming a green coating on the composite article by applying to the surface of the composite a mixture of particles having diameters in the range of 0.05 to 50 micrometers and a curable liquid polymeric silicon-containing binder, said binder being present in the mixture in an amount of from about 1 to about 25% by weight of said particles;
b. curing the green coating by heating the coating to convert the binder to ceramic material to form a porous layer; and
c. infiltrating and covering the porous layer with a ceramic layer by chemical vapor infiltration.

2. The process of claim 1 wherein the particles are selected from the group consisting of boron carbide, silicon carbide, silicon boride, calcium boride, tantalum boride, niobium boride, hafnium boride, aluminum boride, zirconium boride, rare-earth borides, yttrium boride, germanium boride, germanium silicide, tatanium silicide, titanium boride, metallic silicides, and mixed phase boride/silicide combinations.

3. The process of Claims 1 or 2 wherein the ceramic maatrix of the composite article is selected from the group consisting of predominantly silicon carbide and predominantly silican nitride, the binder being selected from the group consisting of polycarbosilanes and polycarbosilazanes, and the ceramic layer deposited by chemical vapor infiltration is selected from the group consisting of silicon carbide and silicon nitride.

4. The process of Claims 1, 2 or 3 wherein the particles have diameters in the range of 0.1 to 30 micrometers; the depth of the cured coating is from 0.1 to 25 mils (2.5 to 625 micrometers); the binder is present in an amount of from about 5 to 15% by weight of the particles; and the ceramic layer has a thickness of from 0.1 to 25 mils (2.5 to 625 micrometers) over the particles.

5. The process of Claims 1, 2, 3 or 4 wherein the ceramic layer is coated with a solution of a preceramic polymer selected from the group consisting of polycarbosilanes and polycarbosilazanes, and the solution is cured.

6. A coated ceramic article made by the process of Claims 1, 2, 3, 4 or 5.

## Patentansprüche

1. Verfahren zum Auftragen eines Überzugs auf einen Verbundgegenstand, der eine unter Kohlenstoff oder keramischem Material ausgewählte Matrix besitzt, wobei die Matrix Oberflächenporosität aufweist, und wobei das Verfahren umfaßt:
a. Bildung eines grünen Überzugs auf dem Verbundgegenstand durch Auftragen auf die Oberfläche des Verbundes einer Mischung von Teilchen mit Durchmessern im Bereich von 0,05 bis 50 Mikrometern und eines härtbaren flüssigen polymeren siliciumhaltigen Bindemittels, wobei das genannte Bindemittel in der Mischung in einer Menge von etwa 1 bis etwa 25 Gewichtsprozent der genannten Teilchen vorliegt;
b. Härtung des grünen Überzugs durch Erhitzen des Überzugs, um das Bindemittel unter Bildung einer porösen Schicht in keramisches Material zu überführen;
c. Infiltration und Beschichtung der porösen Schicht mit einer keramischen Schicht durch chemische Dampfinfiltration.

2. Verfahren nach Anspruch 1, bei welchem die Teilchen ausgewählt sind aus der Gruppe bestehend aus Borcarbid, Siliciumcarbid, Siliciumborid, Calciumborid, Tantalborid, Niobborid, Hafniumborid, Aluminiumborid, Zirconiumborid, seltene Erdmetallboride, Yttriumborid, Germaniumborid, Germaniumsilicid, Titansilicid, Titanborid, metallische Silicide und gemischtphasige Borid/Silicid-Kombinationen.

3. Verfahren nach den Ansprüchen 1 oder 2, bei welchem die keramische Matrix des Verbundgegenstandes ausgewählt ist aus der Gruppe bestehend aus vorwiegend Siliciumcarbid und vorwiegend Siliciumnitrid, das Bindemittel ausgewählt ist aus der Gruppe bestehend aus Polycarbosilanen und Polycarbosilazanen, und die keramische Schicht, die durch chemische Dampfinfiltration abgeschieden wird, ausgewählt ist aus der Gruppe bestehend aus Siliciumcarbid und Siliciumnitrid.

4. Verfahren nach den Ansprüchen 1, 2 oder 3, bei welchem die Teilchen Durchmesser im Bereich von 0,1 bis 30 Mikrometer aufweisen, die Tiefe des gehärteten Überzugs von 0,1 bis 25 mils (2,5 bis 625 Mikrometer) beträgt, das Bindemittel in einer Menge von etwa 5 bis 15 Gewichtsprozent der Teilchen vorliegt; und die keramische Schicht eine Dicke von 0,1 bis 25 mil (2,5 bis 625 Mikrometer) über den Teilchen aufweist.

5. Verfahren nach den Ansprüchen 1, 2, 3 oder 4, bei welchem die keramische Schicht mit einer Lösung eines präkeramischen Polymeren beschichtet wird, ausgewählt aus der Gruppe bestehend aus Polycarbosilanen und Polycarbosilazanen, und die Lösung gehärtet wird.

6. Beschichteter keramischer Gegenstand, hergestellt nach dem Verfahren der Ansprüche 1, 2, 3, 4 oder 5.

## Revendications

1. Un procédé d'application d'un revêtement à un article composite comportant une matrice choisie parmi le carbone ou un matériau céramique, ladite matrice présentant une porosité de surface, le procédé comprenant les étapes suivantes:
a. formation d'un revêtement cru sur l'article composite par application sur la surface du composite d'un mélange de particules dont les diamètres sont compris entre 0,05 et 50 micromètres et un liant contenant du silicium polymère liquide durcissable, ledit liant étant présent dans le mélange en quantité d'environ 1 à environ 25% par rapport au poids desdites particules;
b. durcissement du revêtement cru par chauffage du revêtement en vue de convertir le liant en matériau céramique pour former une couche poreuse; et
c. infiltration et recouvrement de la couche poreuse par une couche de céramique par infiltration chimique de vapeur.

2. Le procédé selon la revendication 1 dans lequel les particules sont choisies dans le groupe constitué par carbure de bore, carbure de silicium, borure de silicium, borure de calcium, borure de tantale, borure de niobium, borure d'hafnium, borure d'aluminium, borure de zirconium, borure de terres rares, borure d'yttrium, borure de germanium, siliciure de titane, borure de titane, siliciure métallique et combinaisons borure/silicium en phase mixte.

3. Le procédé selon la revendication 1 ou 2, dans lequel la matrice céramique de l'article composite est choisie dans le groupe constitué en prédominance par carbure de silicium, et en prédominance nitrure de silicium, le liant étant choisi dans le groupe constitué par les polycarbosilanes et les polycarbosilazanes, et la couche céramique déposée par filtration chimique de vapeur est choisie dans le groupe constitué par le carbure de silicium et le nitrure de silicium.

4. Le procédé selon la revendication 1, 2 ou 3, dans lequel les diamètres des particules sont compris entre 0,1 et 30 micromètres; la profondeur du revêtement durci est comprise entre 2,5 et 625 micromètres (0,1 et 25 miles); le liant est présent en quantité d'environ 5 à 15% par rapport au poids des particules; et l'épaisseur de la couche céramique est comprise entre 2,5 et 625 micromètres (0,1 et 25 miles) au-dessus des particules.

5. Le procédé selon la revendication 1, 2, 3 ou 4 dans lequel la couche céramique est revêtue d'une solution de polymère précéramique choisie dans le groupe constitué par les polycarbosilanes et les polycarbosilazanes, et la solution est durcie.

6. Un article en céramique revêtu fabriqué par le procédé selon la revendication 1, 2, 3, 4 ou 5.
